# EUROPÄISCHE PATENTSCHRIFT

(11) **EP 0 966 783 B1**
(45) Veröffentlichungstag und Bekanntmachung des Hinweises auf die Patenterteilung: **18.09.2002**
(21) Anmeldenummer: 98921339.2
(22) Anmeldetag: 10.03.1998
(51) Int. Cl.: H02J 7/00, H02J 1/14

(54) **SCHALTUNGSANORDNUNG ZUM VERSORGEN EINES VERBRAUCHERS MIT ELEKTRISCHER ENERGIE**
CIRCUIT FOR SUPPLYING A CONSUMER WITH ELECTRIC ENERGY
MONTAGE POUR L'ALIMENTION D'UN CONSOMMATEUR EN ENERGIE ELECTRIQUE

(30) Priorität: 13.03.1997 DE 19710363
(43) Veröffentlichungstag der Anmeldung: 29.12.1999
(73) Patentinhaber: ROBERT BOSCH GMBH, 70442 Stuttgart (DE)
(72) Erfinder: HOG, Norbert, D-77815 Bühl (DE)
(86) Internationale Anmeldenummer: DE9800697
(87) Internationale Veröffentlichungsnummer: WO98040949

(56) Entgegenhaltungen:
- EP-A- 0 461 432
- WO-A-96/11817
- DE-A- 4 131 981
- DE-C- 3 936 638
- US-A- 5 416 702

## Beschreibung

### Stand der Technik

Die Erfindung geht aus von einer Schaltungsanordnung zum Versorgen eines Verbrauchers mit elektrischer Energie nach der Gattung des Hauptanspruchs. Aus der DE-OS 39 36 638 ist eine gattungsgemäße Schaltungsanordnung bekannt, die in einem Bordnetz eines Kraftfahrzeugs die Energieversorgung der elektrischen Verbraucher sicherstellt. Durch gezieltes Abschalten einzelner Verbraucher wird ein Absinken der Bordspannung unter einen vorgegebenen Wert verhindert. Mit dieser Maßnahme ist sichergestellt, daß der Energieinhalt der Kraftfahrzeugbatterie zumindest noch für einen Startvorgang ausreicht. Um ein zu häufiges Ein- und Ausschalten einzelner Verbraucher bei Erreichen eines Schwellenwerts der Batteriespannung zu verhindern, muß eine Hysterese vorgesehen werden, die dafür sorgt, daß ein Verbraucher nach dem Abschalten erst wieder eingeschaltet wird, wenn die Spannung um den Betrag der Hysterese angestiegen ist.

Eine Schaltungsanordnung zum Versorgen eines Verbrauchers gemäß Oberbegriff von Anspruch 1 ist aus der US-A-5,416,702 bekannt. Dort wird prioritätsabhängig die Leistungsaufnahme von Verbrauchern vollständig oder teilweise mit Hilfe einer Fuzzy-Logik reduziert. Die Reduzierung der Abgabeleistung der Batterie hängt ab von der gemessenen Batteriekapazität. Damit soll ein Absinken der in der Batterie enthaltenen Restenergie unter ein vorgegebenes Maß verhindert werden.

Der Erfindung liegt die Aufgabe zugrunde, eine Schaltungsanordnung zum Versorgen eines Verbrauchers mit elektrischer Energie anzugeben, die ein Absinken der in einer Batterie enthaltenen Restenergie unter ein vorgegebenes Maß verhindert.

Die Aufgabe wird durch die im Hauptanspruch angegebenen Merkmale gelöst.

### Vorteile der Erfindung

Die erfindungsgemäße Schaltungsanordnung weist den Vorteil auf, daß die in der Batterie gespeicherte Energie bis zum Erreichen einer vorgegebenen Mindestbatteriespannung vollständig zum Versorgen der Verbraucher zur Verfügung gestellt werden kann. Durch die kontinuierliche Arbeitsweise der erfindungsgemäßen Schaltungsanordnung wird ein häufiges vollständiges Ein- und Ausschalten des Verbrauchers vermieden.

Erreicht werden die Vorteile dadurch, daß ein Regler vorgesehen ist, der die Batteriespannung auf die Mindestbatteriespannung regelt durch Abgabe einer Stellgröße, die die elektrische Leistungsaufnahme des Verbrauchers festlegt. Voraussetzung ist, daß die Leistung des Verbrauchers zumindest innerhalb vorgegebener Grenzen steuerbar ist. Sofern die erfindungsgemäße Schaltungsanordnung in einem Kraftfahrzeug angeordnet ist, sind solche Verbraucher beispielsweise ein Lüfter, eine Klimaanlage, eine Kühlbox, ein Empfänger einer Fernbedienung oder beispielsweise eine Alarmanlage. Die Mindestbatteriespannung, die vorzugeben ist, wird derart festgelegt, daß einerseits die Funktion der Verbraucher noch aufrechterhalten werden kann und daß andererseits noch eine Reserve verbleibt, um beispielsweise in einem Kraftfahrzeug einen Startvorgang durchführen zu können.

Vorteilhafte Weiterbildungen und Ausgestaltungen der erfindungsgemäßen Schaltungsanordnung ergeben sich aus abhängigen Ansprüchen.

Eine erste vorteilhafte Ausgestaltung sieht vor, daß die Leistungsaufnahme des Verbrauchers durch eine Impulsbreitenmodulation der Versorgungsspannung des Verbrauchers festgelegt ist. Die Taktfrequenz wird vorzugsweise derart festgelegt, daß der Verbraucherstrom möglichst kontinuierlich fließt.

Eine andere Ausgestaltung sieht vor, daß die Stellgröße, welche die elektrische Leistungsaufnahme des Verbrauchers festlegt, auf einen unteren Wert begrenzt wird. Die Begrenzung auf einen unteren Wert kann zunächst im Hinblick auf das Verhalten des Verbrauchers sinnvoll sein. Ein anderer wesentlicher Vorteil liegt darin, daß ein Absinken der Spannung der Batterie im Rahmen von Regelschwingungen unter die vorgegebene Mindestbatteriespannung weitgehend vermeidbar ist.

Eine vorteilhafte Weiterbildung sieht vor, daß die Mindestbatteriespannung beeinflußt ist in Abhängigkeit von Korrekturgrößen wie beispielsweise die Batterietemperatur oder den durch die Batterie fließenden Strom.

Eine bevorzugte Verwendung der erfindungsgemäßen Schaltungsanordnung ist in einem Kraftfahrzeug gegeben, das ein elektrisches Bordnetz mit einer Batterie aufweist. Als Verbraucher ist beispielsweise eine Klimaanlage oder zumindest ein Lüfter vorgesehen. Weiterhin kann als Verbraucher eine Fernbedienanlage oder eine Alarmanlage vorgesehen sein. Diese Verbraucher können bei verlassenem Fahrzeug aktiv sein, ohne daß die Gefahr einer Unterschreitung der vorgegebenen Mindestbatteriespannung gegeben ist.

Weitere vorteilhafte Weiterbildungen und Ausgestaltungen der erfindungsgemäßen Schaltungsanordnung ergeben sich aus weiteren abhängigen Ansprüchen und aus der folgenden Beschreibung.

### Zeichnung

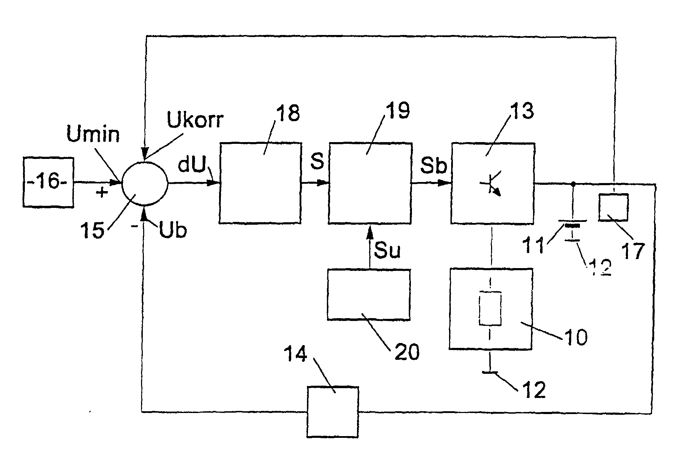

Die Figur zeigt ein Blockschaltbild einer erfindungsgemäßen Schaltungsanordnung zum Versorgen eines Verbrauchers mit elektrischer Energie, die von einer Batterie bereitgestellt ist.

Die Figur zeigt einen Verbraucher 10, der mit elektrischer Energie zu versorgen ist, die von einer Batterie 11 bereitgestellt wird. Der Verbraucher 10 und die Batterie 11 sind an einer Schaltungsmasse 12 angeschlossen. Der Verbraucher 10 ist weiterhin über eine Endstufe 13 mit der Batterie 11 verbindbar.

Die Spannung an der Batterie 11 wird von einem Spannungsmeßgerät 14 erfaßt und als Batteriespannung Ub einer Summierstelle 15 zugeleitet, die in einem Regelkreis enthalten ist. Der Summierstelle 15 werden weiterhin eine Mindestbatteriespannung Umin, die von einem Mindestspannungs-Sollwertgeber 16 bereitgestellt ist, sowie eine Korrekturspannung Ukorr zugeführt, die ein Batteriekenngrößenmeßgerät 17 bereitstellt, zugeführt.

Die Summierstelle 15 gibt eine Regelabweichung dU an einen Regler 18 ab, der eine Stellgröße S erzeugt, die einem Stellgrößenumformer 19 zugeführt wird. Der Stellgrößenumformer 19 erhält einen unteren Grenzwert Su zugeführt, den ein Grenzwertgeber 20 bereitstellt, und gibt eine begrenzte Stellgröße Sb an die Endstufe 13 ab.

Die erfindungsgemäße Schaltungsanordnung arbeitet folgendermaßen:

Der Verbraucher 10, der von der Batterie 11 mit elektrischer Energie versorgt wird, soll möglichst lange betrieben werden können, ohne daß die Gefahr einer Tiefentladung der Batterie 11 auftritt. Die Batterie 11 ist beispielsweise in einem Kraftfahrzeug angeordnet. Bei abgeschaltetem Motor, wenn also die Batterie nicht nachgeladen wird, muß dafür gesorgt werden, daß stets genügend Energie in der Batterie 11 verbleibt, um den Motor starten zu können.

Unter der Voraussetzung, daß die mittlere Leistungsaufnahme des Verbrauchers 10 zumindest innerhalb gegebener Grenzen steuerbar ist, wird die mittlere Leistung derart festgelegt, daß die Batteriespannung Ub auf eine vorgegebene Mindestbatteriespannung Umin geregelt wird. Die Regelung versucht demnach, die Batteriespannung Ub während der Entladung der Batterie und bei Erreichen der Mindestbatteriespannung Umin möglichst lange auf dem Wert der Mindestbatteriespannung Umin durch Absenken der mittleren Leistung des Verbrauchers 10 zu halten.

Zur Durchführung der Regelung wird die an der Batterie 11 liegende Spannung vom Spannungsmeßgerät 14 erfaßt und als Istwert der Batteriespannung Ub der Summierstelle 15 zugeleitet, die in einem Regelkreis enthalten ist. Der Sollwert des Regelkreises wird vom Mindestspannungs-Sollwertgeber 16 als Mindestbatteriespannung Umin bereitgestellt. Gegegebenfalls wird eine Korrektur vorgenommen, die die Mindestbatteriespannung Umin mittels der Korrekturspannung Ukorr zumindest geringfügig verschiebt. Die Korrekturspannung Ukorr wird vom Batteriekenngrößenmeßgerät 17 bereitgestellt, das beispielsweise die Temperatur der Batterie 11 oder beispielsweise den durch die Batterie 11 fließenden Entladestrom erfaßt. Diese Kenngrößen haben Einfluß auf die der Batterie 11 entnehmbare Energie und werden deshalb vorteilhafter Weise zur Korrektur der vorab fest vorgegebenen Mindestbatteriespannung Umin herangezogen. Die Mindestbatteriespannung Umin muß auf einen Wert festgelegt werden, bei dem ein Kompromiß zwischen der maximal möglichen Betriebszeit des Verbrauchers 10 und der verbleibenden Mindestenergiemenge in der Batterie 11 gefunden wird.

Bei vollständig geladener Batterie, wenn also die Batteriespannung Ub deutlich über der Mindestbatteriespannung Umin liegt, legt der Regler 18 die Stellgröße S auf den maximal möglichen Wert fest, der im Stellgrößenumformer 19 nicht weiter geändert und demnach unverändert als begrenzte Stellgröße Sb der Endstufe 13 zugeleitet wird. In diesem Betriebszustand kann die Endstufe 13 vollständig eingeschaltet sein, um den Verbraucher 10 ohne Begrenzung mit Energie zu versorgen.

Der Regler 18 greift erst ein, wenn die Regelabweichung dU auf einen Wert absinkt, bei dem sich die Batteriespannung Ub der Batteriespannung Umin nähert. Die Stellgröße S wird dann in Abhängigkeit von den im Regler 18 vorgegebenen Algorythmen auf einen Wert festgelegt, der die Endstufe 13 veranlaßt, die dem Verbraucher 10 zugeführte mittlere Leistung zu reduzieren. Der Stellgrößenumformer 19 kann die begrenzte Stellgröße Sb beispielsweise als kontinuierliches Signal bereitstellen, das einen in der Endstufe 13 enthaltenen Transistor im kontinuierlichen Betrieb auf- oder zusteuert. Vorzugsweise formt der Stellgrößenumformer 19 aus der Stellgröße S die begrenzte Stellgröße Sb als impulsbreitenmoduliertes Signal, das die Endstufe 13 im festgelegten Takt entweder vollständig ein- oder vollständig abschaltet.

Sobald anhand der Regelabweichung dU festgestellt wird, daß die vorgegebene Mindestbatteriespannung Umin unterschritten ist, wird die Stellgröße S und damit die begrenzte Stellgröße Sb derart festgelegt, daß die Endstufe 13 vollständig abgeschaltet ist. Durch die lineare oder hochfrequente Arbeitsweise wird ein Pendeln der Batteriespannung verhindert.

Eine Möglichkeit, das Unterschreiten der Batteriespannung Ub der vorgegebenen Mindestbatteriespannung Umin zu verhindern, ist durch Begrenzung der Stellgröße S auf den vorgegebenen unteren Grenzwert Su gegeben, der vom Grenzwertgeber 20 bereitgestellt wird. Die begrenzte Stellgröße Sb, die der Stellgrößenumformer 19 bereitstellt, weist deshalb vorzugsweise eine Unstetigkeitsstelle auf.

Kann der Regler auch bei Ausgabe des unteren Grenzwerts Su ein Absinken der Batteriespannung nicht weiter verhindern, so wird der Verbraucher 10 komplett abgeschaltet. Es kann auch ein vollständiges Abschalten des Verbrauchers 10 vorgesehen sein, wenn ein Wert der begrenzten Stellgröße Sb unter einen Wert sinkt, der beispielsweise 50 % der Nennleistung des Verbrauchers 10 entspricht.

Als Verbraucher 10 ist bei einem Einsatz der erfindungsgemäßen Schaltungsanordnung in einem Kraftfahrzeug beispielsweise eine Klimaanlage oder zumindest ein Lüfter als Bestandteil der Klimaanlage vorgesehen. Bei sehr warmen Innenraumtemperaturen kann die Klimaanlage oder zumindest der Lüfter auch bei abgestelltem Kraftfahrzeug eingeschaltet werden, ohne daß die Gefahr einer Tiefentladung der Batterie 11 auftritt. Bei einer Verwendung im Kraftfahrzeug können weitere Verbraucher 10 vorgesehen sein, die auch bei abgestelltem Fahrzeug eingeschaltet sind. Solche Verbraucher sind beispielsweise ein Empfänger einer Fernbedienanlage oder beispielsweise eine Alarmanlage.

## Patentansprüche

1. Schaltungsanordnung zum Versorgen eines Verbrauchers (10) mit elektrischer Energie, die von einer Batterie (11) bereitgestellt ist, mit einer Vorrichtung (14) zur Messung der Batteriespannung (Ub) und einer Unterspannungsabschaltung (15-20), die den Verbraucher bei Unterschreiten einer vorgegebenen Mindestbatterie-Spannung (Umin) abschaltet, wobei die Unterspannungsabschaltung einen Regler (18) enthält zur Abgabe einer Stellgröße (S, Sb), welche die mittlere elektrische Leistungsaufnahme des Verbrauchers festlegt,
**dadurch gekennzeichnet,**
**daß** der Regler (18) die mittlere elektrische Leistungsaufnahme derart festlegt, daß die Batteriespannung (Ub) auf die Mindestbatteriespannung (Umin) geregelt wird, wenn sich die Batteriespannung (Ub) der Mindestbatteriespannung (Umin) nähert.

2. Schaltungsanordnung nach Anspruch 1, **dadurch gekennzeichnet, daß** die Stellgröße (S, Sb) ein impulsbreitenmoduliertes Signal ist.

3. Schaltungsanordnung nach Anspruch 1 oder 2, **dadurch gekennzeichnet, daß** die Stellgröße (S) auf einen unteren Grenzwert (Su) begrenzt ist, bei dessen Unterschreitung der Verbraucher (10) abgeschaltet wird.

4. Schaltungsanordnung nach einem der vorhergehenden Ansprüche, **dadurch gekennzeichnet, daß** eine Korrektur der vorgegebenen Mindestbatteriespannung (Umin) vorgesehen ist in Abhängigkeit von Betriebskenngrößen der Batterie (11).

5. Schaltungsanordnung nach Anspruch 4, **dadurch gekennzeichnet, daß** als Betriebskenngröße die Temperatur der Batterie (11) vorgesehen ist.

6. Schaltungsanordnung nach Anspruch 5, **dadurch gekennzeichnet, daß** als Betriebskenngröße der durch die Batterie (11) fließende Entladestrom vorgesehen ist.

7. Verwendung der Schaltungsanordnung nach einem der vorhergehenden Ansprüche bei einem Kraftfahrzeug.

8. Verwendung der Schaltungsanordnung nach Anspruch 7, bei der als Verbraucher (10) eine Klimaanlage vorgesehen ist.

9. Verwendung der Schaltungsanordnung nach Anspruch 7, bei der als Verbraucher (10) ein Empfänger einer Fernbedienung oder eine Alarmanlage vorgesehen ist.

## Claims

1. Circuit arrangement for supplying electrical power to a load (10), which electrical power is provided by a battery (11), having an apparatus (14) for measuring the battery voltage (Ub) and having an undervoltage disconnect (15-20) which switches off the load if a predetermined minimum battery voltage (Umin) is undershot, with the undervoltage disconnect containing a regulator (18) for emitting a manipulated variable (S, Sb) which fixes the mean electrical power consumption of the load,
**characterized**
**in that** the regulator (18) fixes the mean electrical power consumption such that the battery voltage (Ub) is regulated at the minimum battery voltage (Umin) when the battery voltage (Ub) approaches the minimum battery voltage (Umin).

2. Circuit arrangement according to Claim 1, **characterized in that** the manipulated variable (S, Sb) is a pulse width-modulated signal.

3. Circuit arrangement according to Claim 1 or 2, **characterized in that** the manipulated variable (S) is limited to a lower limit value (Su) such that the load (10) is switched off if this limit value (Su) is undershot.

4. Circuit arrangement according to one of the preceding claims, **characterized in that** a correction is provided for the predetermined minimum battery voltage (Umin), as a function of the operating characteristics of the battery (11).

5. Circuit arrangement according to Claim 4, **characterized in that** the temperature of the battery (11) is provided as the operating characteristic variable.

6. Circuit arrangement according to Claim 5, **characterized in that** the discharge current flowing through the battery (11) is provided as the operating characteristic variable.

7. Use of the circuit arrangement according to one of the preceding claims, in a motor vehicle.

8. Use of the circuit arrangement according to Claim 7, in which the load (10) is an air-conditioning system or a climate control system.

9. Use of the circuit arrangement according to Claim 7, in which the load (10) is a remote control receiver or an alarm system.

## Revendications

1. Circuit pour l'alimentation d'un consommateur (10) en énergie électrique fournie par une batterie (11) comprenant un dispositif (14) pour mesurer la tension de batterie (Ub) ainsi qu'un circuit de sous-tension 15 - 20) qui coupe le consommateur en cas de passage en dessous d'une tension minimale de batterie (Uₘᵢₙ), le circuit de coupure de sous-tension comportant un régulateur (18) fournissant une grandeur d'actionnement (S, Sb) qui fixe le prélèvement de puissance électrique moyenne du consommateur,
**caractérisé en ce que**
le régulateur (18) fixe le prélèvement de puissance électrique minimale en réglant la tension de batterie (Ub) sur la tension minimale de batterie (Uₘᵢₙ) lorsque la tension de batterie (Ub) se rapproche de la tension de batterie minimale (Uₘᵢₙ).

2. Circuit selon la revendication 1,
**caractérisé en ce que**
la grandeur d'actionnement (S, Sb) est un signal à modulation de largeur d'impulsion.

3. Circuit selon les revendications 1 ou 2,
**caractérisé en ce que**
la grandeur d'actionnement (S) est limitée à une valeur limite inférieure (Su) dont le dépassement par en dessous coupe le consommateur (10).

4. Circuit selon l'une des revendications précédentes,
**caractérisé par**
une correction de la tension de batterie minimale prévue (Uₘᵢₙ) selon des caractéristiques de fonctionnement de la batterie (11).

5. Circuit selon la revendication 4,
**caractérisé en ce que**
la caractéristique de fonctionnement est la température de la batterie (11).

6. Circuit selon la revendication 5,
**caractérisé en ce que**
la caractéristique de fonctionnement est le courant de décharge traversant la batterie (11).

7. Application du circuit selon l'une des revendications précédentes à un véhicule automobile.

8. Application du circuit selon la revendication 7, à un consommateur (10) constitué par une installation de climatisation.

9. Application du circuit selon la revendication 7, à un consommateur (10) constitué par un récepteur d'une télécommande ou d'une installation d'alarme.
